# EUROPEAN PATENT SPECIFICATION

(11) **EP 3 395 418 B1**
(45) Date of publication and mention of the grant of the patent: **18.11.2020**
(21) Application number: 17202777.3
(22) Date of filing: 21.11.2017
(51) Int. Cl.: A63F 13/24, A63F 13/213

(54) **HAND-HELD CONTROLLER USING LED TRACKING RING BACKGROUND**
HANDHALTBARES STEUERGERÄT MIT LED-VERFOLGUNGSRINGHINTERGRUND
CONTRÔLEUR PORTATIF UTILISANT UN FOND ANNULAIRE DE POURSUITE À DEL

(30) Priority: 26.04.2017 US 201715498402; 15.06.2017 WO PCT/US2017/037608
(43) Date of publication of application: 31.10.2018
(73) Proprietor: Facebook Technologies, LLC, Menlo Park, CA 94025 (US)
(72) Inventor: BRISTOL, Peter Wesley, Menlo Park, CA California 94025 (US); CHEN, Yi-Yaun, Menlo Park, CA California 94025 (US); TOMPKINS, Glen Jason, Menlo Park, CA California 94025 (US)
(74) Representative: Murgitroyd & Company

(56) References cited:
- US-A- 5 764 164
- US-A1- 2016 357 261
- US-S- D 772 986

## Description

### Field of the Disclosure

The present disclosure generally relates to virtual reality (VR) controllers, and specifically to a hand-held controller using an LED tracking ring.

### Description of the Related Arts

VR systems may include a controller to translate movement of the user's body into tangible action in a virtual world. Some controllers provide vibration feedback to Android or iOS VR headsets for motion-based gaming. A controller may be equipped with a gyroscope, an accelerometer, or terrestrial magnetic field sensor to trace motion back to a game, allowing intuitive gameplay as if the player is within the game.

US 2016/0357261 describes a virtual-reality system includes a head-mounted display (HMD), a forward-looking camera coupled to the HMD and a hand-held controller communicatively coupleable to the HMD. The hand-held controller includes a first user-input key, a grip, and an outward-facing surface coupled to the grip. The outward-facing surface includes a plurality of illumination sources which provide light that is detectable by the camera for sensing a position of the controller based on a user motion. USD772986S discloses a VR controller with a handle having a button/trigger at the end and connected to a ring with LED facing downwards.

### SUMMARY

The invention is defined in the independent claims. Preferred features are set out in the dependent claims.

### BRIEF DESCRIPTION OF THE DRAWINGS

The teachings of the embodiments can be readily understood by considering the following detailed description in conjunction with the accompanying drawings.
Figure (FIG.) 1 is an example schematic perspective view of a hand-held controller, in accordance with an embodiment.
FIG. 2 is an example schematic side view of the hand-held controller, in accordance with an embodiment.
FIG. 3 is an example schematic block diagram of the hand-held controller, in accordance with an embodiment.

The figures depict various embodiments for purposes of illustration only.

### DETAILED DESCRIPTION

In the following description of embodiments, numerous specific details are set forth in order to provide more thorough understanding. However, note that the embodiments may be practiced without one or more of these specific details. In other instances, well- known features have not been described in detail to avoid unnecessarily complicating the description.

Embodiments are described herein with reference to the figures where like reference numbers indicate identical or functionally similar elements. Also in the figures, the left most digits of each reference number corresponds to the figure in which the reference number is first used.

Embodiments relate to a hand-held VR controller to track a user's hand motion and position. The hand-held controller includes a handle extending in a longitudinal direction. A ring is attached to an end of the handle and has a curved outer surface. Light sources are mounted on the curved outer surface and configured to emit light to be captured by an imaging device for tracking a position or orientation of the hand-held controller.

### Example Schematic Perspective View of Hand-Held Controller

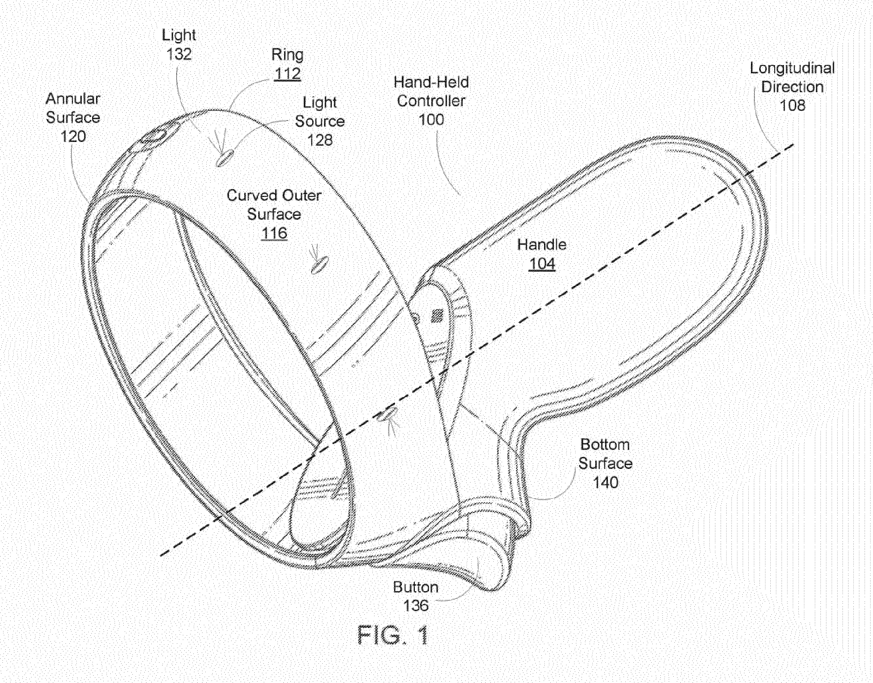

FIG. 1 is an example schematic perspective view of a hand-held controller 100, in accordance with an embodiment. The hand-held controller 100 may be included in a VR system as a stand-alone controller or as part of a pair of tracked controllers that give a user "hand presence"-the feeling that the user's virtual hands are actually his own. The hand-held controller 100 may enable the user to manipulate objects in a virtual space with precision and intuitive, natural hand movement.

The hand-held controller 100 includes a handle 104 extending in a longitudinal direction 108. In one embodiment, the handle 104 may be made of an engineering plastic, such as injection-molded polycarbonate (PC)/acrylonitrile butadiene styrene (ABS) or polyamide (nylon). In other embodiments, the handle 104 may be made of wood or metal. The handle 104 may be resistant to impact and abrasion. The material of the handle 104 may exhibit heat resistance, mechanical strength, or rigidity.

The handle 104 is shaped and dimensioned to be grasped by a user's hand for tracking natural gestures and finger movements to create more realistic and tactile VR. For example, the handle may have a cylindrical shape. The handle 104 of the hand-held controller 100 may bend or curve to balance the weight of the controller 100, such that it rests naturally in the top of the palm of the user or the crook of the user's fingers. The user may therefore comfortably hold the hand-held controller 100 without dropping it. Even if the user tries to open his hand completely when holding the hand-held controller 100 normally, the user's fingers may catch on the ring 112 and support the hand-held controller 100's weight. The ring 112 is attached to an end of the handle 104 and has an annular surface 120. The ring may be made of engineering plastic. In one embodiment, the ring is made of infrared- transparent polycarbonate. The ring 112 may surround a thumb of the user when the handle 104 is grasped by the user's hand.

The ring 112 has a curved outer surface 116, as illustrated in FIG. 1. Light sources 128 are mounted on the curved outer surface 116 to emit light 132 to be captured by an imaging device for tracking a position or orientation of the hand-held controller 100. The light 132 is emitted in a direction normal to the curved outer surface 116. The light sources 128 may be light-emitting diodes. A light-emitting diode 128 is a two-lead semiconductor light source, such as a p-n junction diode, which emits light 132 when receiving an electrical signal. A VR system may include a camera to track a position or orientation of the hand-held controller 100 by capturing the emitted light 132. For example, a camera may be mounted on a computer monitor covering a field of view including the hand-held controller 100.

The hand-held controller 100 may include a trigger button 136 located on a bottom surface 140 of the handle 104. The trigger button 136 may be pressed by an index or middle finger of the user's hand. The trigger button 136 may provide a signal for grasping, lifting, etc., of virtual objects in a VR space. The trigger button 136 may have a symmetrical shape, such as rectangular, elliptical or circular. The trigger button 136 may be made of rubber or plastic.

### Example Schematic Side View of Hand-Held Controller

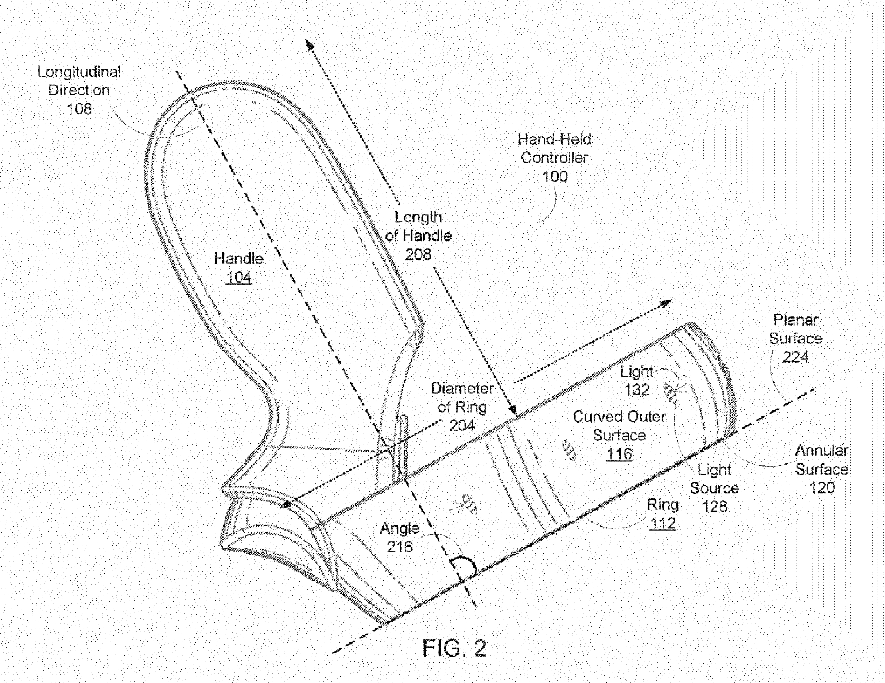

FIG. 2 is an example schematic side view of the hand-held controller 100, in accordance with an embodiment. The annular surface 120 of the ring 112, illustrated and described above with reference to FIG. 1, defines a plane 224 that forms a predetermined angle 216 with respect to the longitudinal direction 108 in which the handle 104 extends. The predetermined angle 216 may be between 45° to 135°. With the ring geometry illustrated in FIG. 2, if the predetermined angle 216 is more than 45°, this avoids interference with the thumb movement of the user. If the predetermined angle 216 is less than 135°, this avoids any affects to the inside-out tracking visibility to a camera mounted on an HMD.

In embodiments, a preferred ratio of a diameter 204 of the ring 112 to a length 208 of the handle 104 is 9:10. The preferred ratio of the diameter 204 of the ring 112 to a length 208 of the handle 104 reduces the ring size while allowing thumb clearance for a 95^{th} percentile male user. The handle 104 grip is sized such that it may be used by a 5th percentile female user.

### Example Schematic Block Diagram of Hand-Held Controller

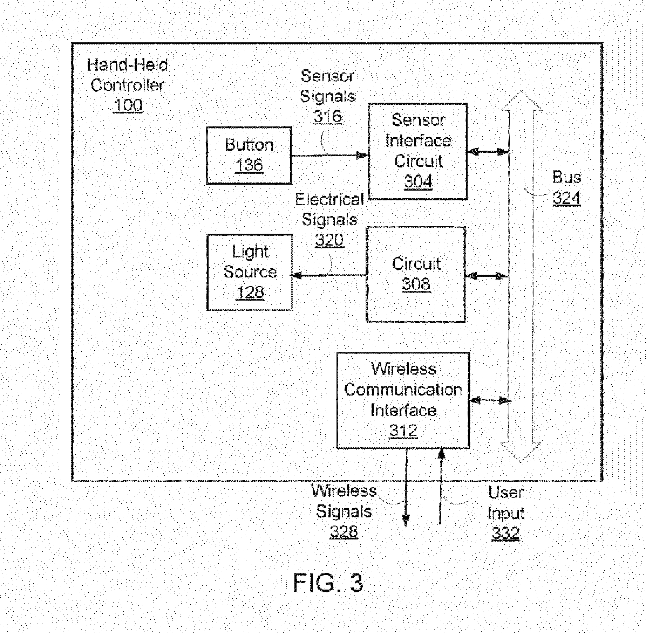

FIG. 3 is an example schematic block diagram of the hand-held controller 100, in accordance with an embodiment. The hand-held controller 100 includes the trigger button 136, a sensor interface circuit 304, light source 128, a circuit 308, a wireless communication interface 312, and a bus 324. In alternative configurations, different and/or additional components may be included in the hand-held controller 100, such as a memory, central processing unit, battery, Bluetooth component, USB input, etc.

The sensor interface circuit 304 is a digital, analog, or mixed-signal circuit to receive sensor signals 316 in the form of voltage or current from the trigger button 136 when the trigger button 136 is pressed by the user. The button 136 generates the sensor signals 316 responsive to being pressed by an index or a middle finger of the user's hand. The trigger button 136 may be connected to a transducer that converts the mechanical motion of the trigger button 136 into the sensor signals 316. The hand-held controller 100 may include a circuit 308 to provide electrical signals 320, such as voltage, to the light sources 128. The circuit 308 may be powered by a battery on the hand-held controller 100 to generate the electrical signals 320. The light sources emit the light 132 responsive to receiving the electrical signals 320.

The hand-held controller 100 may include a wireless communication interface 312, which may be a digital, analog, or mixed-signal circuit to transmit wireless signals 328 indicating user input 332 received from the user's hand. The wireless signals 328 may be transmitted to a head-mounted display, a computer, a VR system, etc. The wireless communication interface 312 may send and receive data via a wireless network without the need for connecting cables to the hand-held controller 100. In one embodiment, the wireless communication interface 312 may support the USB 1.1 and 802.11b wireless network standards up to 11 Mbps data transfer rates. In one embodiment, the wireless communication interface 312 may support the USB 2.0 and 802.11g standards up to 54 Mpbs data transfer rates. In one embodiment, the wireless communication interface 312 may be a Compact Flash (CF) wireless network adapter use infrared technology for data exchanges between the hand-held controller 100 and a computer, etc. The wireless communication interface 412, the sensor interface circuit 304, and the circuit 308 may communicate via the bus 324.

## Claims

1. A hand-held controller (100) comprising:
a handle (104) extending in a longitudinal direction (108), the handle (104) shaped and dimensioned to be grasped by a user's hand; a ring (112) attached to a first end of the handle (104) the ring(112) having:
an annular surface (120) defining a plane (224) that forms a predetermined angle with respect to the longitudinal direction (108), and
a curved outer surface (116);
a plurality of light sources (128) mounted on the curved outer surface (116) and configured to emit light to be captured by an imaging device for tracking a position or orientation of the hand-held controller (100), the light emitted in a direction normal to the curved outer surface (128); and
a button (136) located on a bottom surface (140) of the first end of the handle (104), the button (136) configured for pressing by an index or middle finger of the user's hand, **characterized in that**, the ring (112) is configured to surround the thumb of the user when the handle (104) is grasped by the user's hand, wherein the predetermined angle is between 45° to 135°.

2. The hand-held controller (100) of claim 1, wherein the handle (104) has a cylindrical shape.

3. The hand-held controller (100) of any of claims 1 to 2, wherein the button (136) has a symmetrical shape.

4. The hand-held controller (100) of any of claims 1 to 3, wherein a preferred ratio of a diameter of the ring to a length of the handle (104) is 9:10.

5. The hand-held controller (100) of any of claims 1 to 4, wherein the light sources (128) are light-emitting diodes.

6. The hand-held controller (100) of any of claims 1 to 5, wherein the handle (104) is made of engineering plastic.

7. The hand-held controller (100) of any of claims 1 to 6, wherein the ring (112) is made of engineering plastic.

8. The hand-held controller (100) of any of claims 1 to 7, further comprising a sensor interface circuit (304) configured to receive sensor signals (316) from the button (136) located on the bottom surface (140) of the handle (104), the button (136) configured to generate the sensor signals (316) responsive to being pressed by an index or a middle finger of the user's hand.

9. The hand-held controller (100) of any of claims 1 to 8, further comprising a circuit (308) configured to provide electrical signals to the plurality of light sources (128).

10. The hand-held controller (100) of any of claims 1 to 9, further comprising a wireless communication interface (312) configured to transmit wireless signals (328) indicating user input (332) received from the user's hand.

## Patentansprüche

1. Eine handgehaltene Steuervorrichtung (100), Folgendes beinhaltend:
einen Griff (104), der sich in einer Längsrichtung (108) erstreckt, wobei der Griff (104) geformt und bemessen ist, um durch eine Hand eines Benutzers gegriffen zu werden;
einen Ring (112), der an einem ersten Ende des Griffs (104) befestigt ist, wobei der Ring (112) Folgendes aufweist:
eine ringförmige Oberfläche (120), die eine Ebene (224) definiert, die einen vorbestimmten Winkel in Bezug auf die Längsrichtung (108) bildet, und
eine gekrümmte äußere Oberfläche (116);
eine Vielzahl von Lichtquellen (128), die auf der gekrümmten äußeren Oberfläche (116) angebracht sind und konfiguriert sind, um Licht zu emittieren, das durch eine Abbildungsvorrichtung zum Verfolgen einer Position oder einer Ausrichtung der handgehaltenen Steuervorrichtung (100) aufgenommen werden soll, wobei das Licht in einer zu der gekrümmten äußeren Oberfläche (128) senkrechten Richtung emittiert wird; und
eine Taste (136), die sich auf einer unteren Oberfläche (140) des ersten Endes des Griffs (104) befindet, wobei die Taste (136) zum Drücken durch einen Zeige- oder Mittelfinger der Hand des Benutzers konfiguriert ist, **dadurch gekennzeichnet, dass** der Ring (112) konfiguriert ist, um den Daumen des Benutzers zu umgeben, wenn der Griff (104) durch die Hand des Benutzers gegriffen wird, wobei der vorbestimmte Winkel zwischen 45° und 135° liegt.

2. Handgehaltene Steuervorrichtung (100) gemäß Anspruch 1, wobei der Griff (104) eine zylindrische Form aufweist.

3. Handgehaltene Steuervorrichtung (100) gemäß einem der Ansprüche 1 bis 2, wobei die Taste (136) eine symmetrische Form aufweist.

4. Handgehaltene Steuervorrichtung (100) gemäß einem der Ansprüche 1 bis 3, wobei ein bevorzugtes Verhältnis eines Durchmessers des Rings zu einer Länge des Griffs (104) 9 : 10 beträgt.

5. Handgehaltene Steuervorrichtung (100) gemäß einem der Ansprüche 1 bis 4, wobei die Lichtquellen (128) Leuchtdioden sind.

6. Handgehaltene Steuervorrichtung (100) gemäß einem der Ansprüche 1 bis 5, wobei der Griff (104) aus technischem Kunststoff hergestellt ist.

7. Handgehaltene Steuervorrichtung (100) gemäß einem der Ansprüche 1 bis 6, wobei der Ring (112) aus technischem Kunststoff hergestellt ist.

8. Handgehaltene Steuervorrichtung (100) gemäß einem der Ansprüche 1 bis 7, ferner beinhaltend einen Sensorschnittstellenschaltkreis (304), der konfiguriert ist, um Sensorsignale (316) von der Taste (136) zu empfangen, die sich auf der unteren Oberfläche (140) des Griffs (104) befindet, wobei die Taste (136) konfiguriert ist, um die Sensorsignale (316) als Reaktion darauf zu erzeugen, dass sie durch einen Zeige- oder einen Mittelfinger der Hand des Benutzers gedrückt wird.

9. Handgehaltene Steuervorrichtung (100) gemäß einem der Ansprüche 1 bis 8, ferner beinhaltend einen Schaltkreis (308), der konfiguriert ist, um elektrische Signale an die Vielzahl von Lichtquellen (128) bereitzustellen.

10. Handgehaltene Steuervorrichtung (100) gemäß einem der Ansprüche 1 bis 9, ferner beinhaltend eine drahtlose Kommunikationsschnittstelle (312), die konfiguriert ist, um drahtlose Signale (328) zu übertragen, die eine Benutzereingabe (332) anzeigen, die von der Hand des Benutzers empfangen wird.

## Revendications

1. Un dispositif de commande tenu à la main (100) comprenant :
une poignée (104) s'étendant dans une direction longitudinale (108), la poignée (104) étant conformée et dimensionnée pour être saisie par la main d'un utilisateur ; une bague (112) étant attachée à une première extrémité de la poignée (104), la bague (112) ayant :
une surface annulaire (120) définissant un plan (224) qui forme un angle prédéterminé par rapport à la direction longitudinale (108), et
une surface externe courbe (116) ;
une pluralité de sources lumineuses (128) montées sur la surface externe courbe (116) et configurées afin d'émettre de la lumière devant être capturée par un dispositif d'imagerie pour suivre une position ou orientation du dispositif de commande tenu à la main (100), la lumière étant émise dans une direction perpendiculaire à la surface externe courbe (128) ; et
un bouton (136) situé sur une surface inférieure (140) de la première extrémité de la poignée (104), le bouton (136) étant configuré pour qu'un index ou majeur de la main de l'utilisateur exerce une pression dessus, **caractérisé en ce que** la bague (112) est configurée pour entourer le pouce de l'utilisateur lorsque la poignée (104) est saisie par la main de l'utilisateur, où l'angle prédéterminé est compris entre de 45° à 135°.

2. Le dispositif de commande tenu à la main (100) de la revendication 1, où la poignée (104) a une conformation cylindrique.

3. Le dispositif de commande tenu à la main (100) de n'importe lesquelles des revendications 1 à 2, où le bouton (136) a une conformation symétrique.

4. Le dispositif de commande tenu à la main (100) de n'importe lesquelles des revendications 1 à 3, où un rapport préféré d'un diamètre de la bague à une longueur de la poignée (104) est 9/10.

5. Le dispositif de commande tenu à la main (100) de n'importe lesquelles des revendications 1 à 4, où les sources lumineuses (128) sont des diodes électroluminescentes.

6. Le dispositif de commande tenu à la main (100) de n'importe lesquelles des revendications 1 à 5, où la poignée (104) est réalisée en plastique d'ingénierie.

7. Le dispositif de commande tenu à la main (100) de n'importe lesquelles des revendications 1 à 6, où la bague (112) est réalisée en plastique d'ingénierie.

8. Le dispositif de commande tenu à la main (100) de n'importe lesquelles des revendications 1 à 7, comprenant en sus un circuit d'interface de capteur (304) configuré afin de recevoir des signaux de capteur (316) en provenance du bouton (136) situé sur la surface inférieure (140) de la poignée (104), le bouton (136) étant configuré afin de générer les signaux de capteur (316) en réponse à une pression qu'un index ou un majeur de la main de l'utilisateur exercerait dessus.

9. Le dispositif de commande tenu à la main (100) de n'importe lesquelles des revendications 1 à 8, comprenant en sus un circuit (308) configuré afin de fournir des signaux électriques à la pluralité de sources lumineuses (128).

10. Le dispositif de commande tenu à la main (100) de n'importe lesquelles des revendications 1 à 9, comprenant en sus une interface de communication sans fil (312) configurée afin de transmettre des signaux sans fil (328) indiquant une entrée utilisateur (332) reçue en provenance de la main de l'utilisateur.
